# EUROPÄISCHE PATENTSCHRIFT

(11) **EP 3 322 910 B1**
(45) Veröffentlichungstag und Bekanntmachung des Hinweises auf die Patenterteilung: **09.03.2022**
(21) Anmeldenummer: 16750095.8
(22) Anmeldetag: 12.07.2016
(51) Int. Cl.: F16D 25/00, H02K 7/108

(54) **HYBRIDMODUL FÜR EINEN ANTRIEBSSTRANG EINES KRAFTFAHRZEUGS**
HYBRID MODULE FOR A DRIVE TRAIN OF A MOTOR VEHICLE
MODULE HYBRIDE DESTINÉ À UN GROUPE MOTOPROPULSEUR D'UN VÉHICULE À MOTEUR

(30) Priorität: 13.07.2015 DE 102015213101
(43) Veröffentlichungstag der Anmeldung: 23.05.2018
(73) Patentinhaber: Schaeffler Technologies AG & Co. KG, 91074 Herzogenaurach (DE)
(72) Erfinder: AGNER, Ivo, 77815 Bühl (DE); KELLER, Aurélie, 67240 Oberhoffen sur Moder (FR); KRAHTOV, Luben, 76530 Baden-Baden (DE)
(86) Internationale Anmeldenummer: PCT/DE2016/200319
(87) Internationale Veröffentlichungsnummer: WO 2017/008807

(56) Entgegenhaltungen:
- DE-A1-102011 086 741
- DE-A1-102011 117 781
- DE-A1-102014 206 330

## Beschreibung

Die vorliegende Erfindung betrifft ein Hybridmodul für einen eine elektrische Maschine, einen Verbrennungsmotor und ein Getriebe aufweisenden Antriebsstrang eines Kraftfahrzeugs gemäß dem Oberbegriff des Anspruchs 1.

Aus der WO 2014/026685 A1 ist ein Hybridmodul für einen Antriebsstrang eines Kraftfahrzeugs bekannt, bei dem eine elektrische Maschine zwischen einem Verbrennungsmotor und einem Getriebe angeordnet ist. Das Hybridmodul weist den Rotor der elektrischen Maschine, eine innerhalb des Rotors angeordnete Trennkupplung mit einer Anpressplatte und eine Ausrückvorrichtung zur Betätigung der Trennkupplung mit einem Ausrücklager auf. Beim Betätigen der Trennkupplung wird ein Kolben des Zentralausrückers axial bewegt, um Tellerfederzungen einer Tellerfeder über ein Ausrücklager zu verformen. Mit anderen Worten wird die Trennkupplung über einen Hebelmechanismus betätigt, der durch die Tellerfeder gebildet ist.

Aus der DE10 2011 117 781 A1 ist ein Hybridmodul mit einer nassen Doppelkupplung bekannt. Hier ist eine zusätzliche Trennkopplung axial zwischen dem Verbrennungsmotor und dem Rotor der elektrischen Maschine angeordnet.

Bezüglich weiteren Standes der Technik wird auf die DE 10 2014 206 330 A1 verwiesen.

Aus der DE 10 2011 086 741 A1 ist ein Hybridmodul gemäß dem Oberbegriff des Anspruchs 1 bekannt.

Es ist Aufgabe der Erfindung ein, vorzugsweise kompaktes, Hybridmodul mit einer Trennkupplung anzugeben, bei dem sich der Betätigungsdruck der Trennkupplung zuverlässig steuern lässt.

Die Lösung der Aufgabe erfolgt erfindungsgemäß durch die Merkmale des unabhängigen Anspruchs. Bevorzugte Ausgestaltungen der Erfindung sind in den Unteransprüchen angegeben, die jeweils einzeln oder in Kombination einen Aspekt der Erfindung darstellen können.

Bei dem Hybridmodul ist vorgesehen, dass die Ausrückvorrichtung einen Drucktopf zur Kraftübertragung von dem Ausrücklager auf die Anpressplatte der Trennkupplung bzw. K0-Trennkupplung aufweist. Die Trennkupplung selbst kann über den Drucktopf ohne zusätzliche Hebelübersetzung betätigt werden. Aufgrund geringer Hysterese durch die Direktbetätigung ist die Kupplung dann präzise druckregelbar.

Das Rotorelement ist bevorzugt der Rotor der elektrischen Maschine oder ein anderes von der elektrischen Maschine antreibbares Rotorelement, insbesondere eine über einen Riementrieb antreibbare Rolle.

Gemäß einer vorteilhaften Ausführungsform ist vorgesehen, dass die Kraftübertragung von dem Ausrücklager über den Drucktopf auf die Anpressplatte eine hebelwirkungsfreie Kraftübertragung ist. Eine solche Kraftübertragung ist besonders präzise.

Gemäß einer bevorzugten Ausgestaltung ist vorgesehen, dass die Ausrückvorrichtung eine Zentralausrückereinheit mit einem Kolben zum Kraftübertrag auf das Ausrücklager aufweist. Kolben und Einrücklager sind bevorzugt radial geschachtelt angeordnet. Durch diese Anordnung von Kolben und Einrücklager ergibt sich ein sehr kompaktes Hybridmodul.

Dabei ist bevorzugt vorgesehen, dass die kurze Führungslänge am Kolben < 0,4 mal dem mittleren Kolbendurchmesser ist und in Kombination mit einem angepassten Spiel eine kardanische Kippbewegung des Kolbens zulässt und somit geometrische Fehler (hier zum Beispiel Schieflagen) bei Differenzdrehzahl zwischen Scheibe und Anpressplatte einfach ausgeglichen werden können.

Gemäß einer weiteren bevorzugten Ausgestaltung ist die Zentralausrückereinheit eine Concentric Slave Cylinder Einheit. Eine derartige Einheit ist an sich bekannt. Die Trennkupplung kann hydraulisch über ein CSC mit kurzen Kolben betätigt werden.

Hierdurch kann mittels eines Kippfreiheitsgrades Schieflagen des Betätigungssystems der Trennkupplung ausgeglichen werden.

Die Ausrückvorrichtung und die Trennkupplung sind axial hintereinander in dem Rotorelement angeordnet.

Gemäß der erfindungsgemäßen Ausführungsform ist vorgesehen, dass die Anpressplatte (der Trennkupplung) über mindestens ein Blattfederelement an einen Rotorsteg des Rotors angebunden ist.

Gemäß einer weiteren vorteilhaften Ausführungsform ist vorgesehen, dass der Drucktopf und die Anpressplatte einstückig verbunden sind. Eine Einheit realisiert also sowohl den Drucktopf als auch die Anpressplatte. Diese Ausführungsform des Hybridmoduls ist besonders kompakt. Alternativ reicht es jedoch aus, dass die Anpressplatte flankenzentriert im Rotorsteg geführt ist. Axial wird dieser durch das Blattfederelement der Anpressplatte immer gegen das Einrücklager gedrückt.

Gemäß einer vorteilhaften Ausführungsform ist vorgesehen, dass das Hybridmodul eine der elektrischen Maschine im Antriebsstrang nachgeschaltete Kupplungseinrichtung, insbesondere Doppelkupplung, aufweist. Generell kann die Kupplungseinrichtung als Einfach- oder als Mehrfachkupplung ausgebildet sein. Gemäß einer bevorzugten Ausgestaltung der Erfindung ist die Kupplungseinrichtung als Doppelkupplung ausgebildet. Die Vollwelle der Doppelkupplung, d.h. die K1-Getriebeeingangswelle wird in einer von einem Verbrennungsmotor angetriebenen Welle, der Zwischenwelle des Hybridmoduls gelagert.

Gemäß einer vorteilhaften Ausführungsform ist vorgesehen, dass das Rotorelement über mindestens eine Verbindung mit einer Gegenplatte der Anfahrkupplung direkt oder indirekt über ein Zwischenelement drehfest verbunden ist.

Schließlich ist mit Vorteil vorgesehen, dass das Hybridmodul ein der Trennkupplung im Antriebsstrang vorgeschaltetes Zweimassenschwungrad aufweist. Ein solches Zweimassenschwungrad dient dem Ausgleich von Drehunförmigkeiten.

Ausführungsformen der Erfindung, auf die diese Erfindung aber nicht beschränkt ist und aus denen sich weitere erfindungsgemäße Merkmale ergeben können, sind in den folgenden Figuren gezeigt.

Es zeigen:
- Fig.1:: ein Hybridmodul gemäß einer ersten Ausführungsform der Erfindung und
- Fig. 2:: ein Hybridmodul gemäß einer zweiten Ausführungsform der Erfindung.

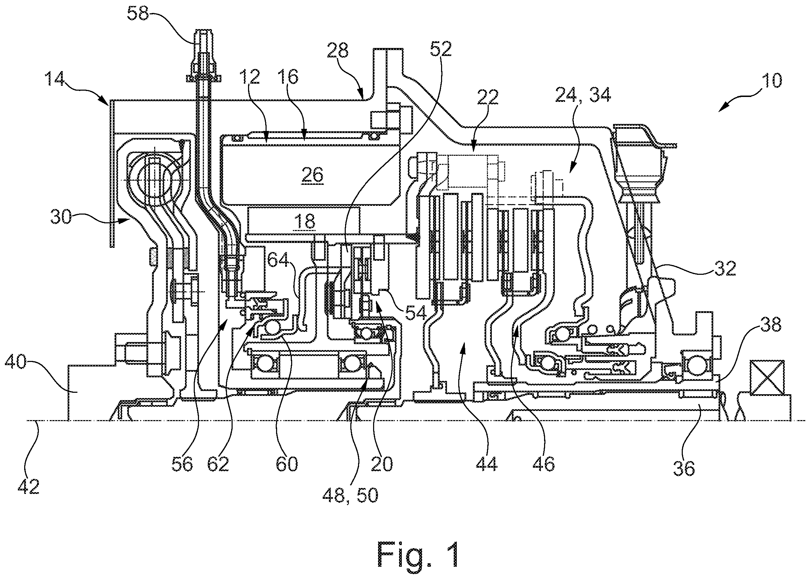

Die Fig. 1 zeigt einen Teil eines Antriebsstranges 10 eines Kraftfahrzeugs in einer Schnittdarstellung. Bei dem Antriebsstrang 10 ist eine elektrische Maschine 12 zwischen einem (nicht gezeigten) Verbrennungsmotor und einem (ebenfalls nicht gezeigten) Getriebe angeordnet. Die elektrische Maschine 12 dient als Antriebsmaschine und ist Teil eines Hybridmoduls 14. Dieses Hybridmodul 14 weist die folgenden Hauptkomponenten auf: (i) eine Funktionseinheit 16 mit einem als Rotor (Läufer) der elektrischen Maschine 12 ausgebildeten Rotorelement 18, einer innerhalb des Rotorelements 18 angeordneten Trennkupplung 20 und zumindest einem mit dem Rotorelement 18 drehfest verbundenen Kupplungsteil 22 einer Kupplungseinrichtung 24, (ii) eine die Funktionseinheit 16 und einen Stator (Ständer) 26 der elektrischen Maschine 12 teilweise einhausende Gehäuseeinheit 28, (iii) ein der Trennkupplung 20 im Antriebsstrang 10 vorgeschaltetes Zweimassenschwungrad 30, sowie (iv) ein die Kupplungseinrichtung 24 einhausendes Gehäuseteil 32 des Getriebes. Die Kupplungseinrichtung 24 ist als Doppelkupplung 34 ausgebildet. Dementsprechend ist das Getriebe als Doppelkupplungsgetriebe ausgebildet, von dem nur die beiden Getriebeeingangswellen 36, 38 dargestellt sind.

Es ergibt sich folgender Pfad des Antriebsstrangs: Abtriebswelle 40 des Verbrennungsmotors - Zweimassenschwungrad 30 - Trennkupplung 20 - Rotorelement 18 der als Innenläufer ausgebildeten elektrischen Maschine 12 - Kupplungseinrichtung 24 - Getriebeeingangswelle 36, 38. Die entsprechenden Wellen 36, 38, 40 liegen dabei auf einer gemeinsamen Achse 42, die die Hauptachse des Hybridmoduls 14 bildet.

Die als Doppelkupplung 34 ausgebildete Kupplungseinrichtung 24 weist zwei Kupplungen 44, 46 mit entsprechenden Anpressplatten, Gegenplatten, Kupplungsscheiben und Betätigungseinrichtungen auf.

Das Rotorelement 18 weist in seinem Inneren eine Rotorlagerung 48 auf, die als zentrale Lagereinrichtung 50 dient, über die die gesamte Funktionseinheit 16 in der Gehäuseeinheit 28 drehbar gelagert ist.

Die Trennkupplung 20 ist hydraulisch betätigbar. Sie weist eine Anpressplatte 52 und eine Gegenplatte 54 auf und wird mittels einer Ausrückvorrichtung 56 über einen Druckanschluss 58 betätigt. Die Ausrückvorrichtung 56 weist ein Ausrücklager 60, eine Zentralausrückereinheit mit einem Kolben 62 zur Kraftübertrag auf das Ausrücklager 60 sowie einen Drucktopf 64 zur Kraftübertragung von dem Ausrücklager 60 auf die Anpressplatte 52 der Trennkupplung 20 auf. Die Kraftübertragung mittels dieses Drucktopfs 64 ist eine hebelwirkungsfreie Kraftübertragung.

Es ergibt sich folgende Funktion:
Der Kolben 62 des Zentralausrückers wirkt auf das Ausrücklager 60, das wiederum direkt auf den Drucktopf 64 wirkt, der mit einer Anpressplatte 52 der Trennkupplung 20 verbunden ist, ohne einen Hebelmechanismus zwischen Ausrücklager 60 und Trennkupplung 20.

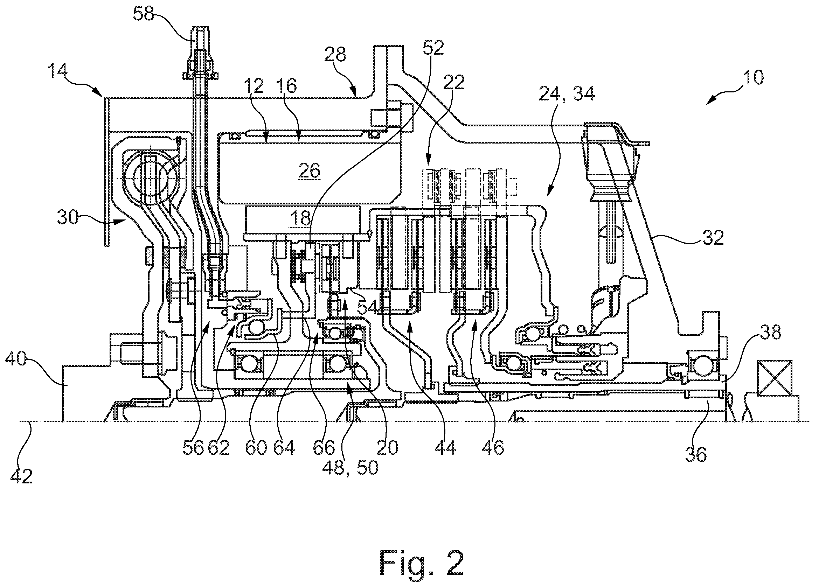

Die Fig. 2 zeigt eine andere Ausführungsform des Hybridmoduls 14. Diese entspricht im Wesentlichen der Ausführungsform des Hybridmoduls 14 aus der Fig. 1, sodass hier nur auf die Unterschiede eingegangen wird. Bei dieser Ausführungsform sind der Drucktopf 64 und die Anpressplatte 52 einstückig verbunden, bilden also eine einstückige Einheit 66.

Bei Verwendung dieser Einheit 66, die die Funktionalität des Drucktopfs 64 und der Anpressplatte 52 kombiniert, ist eine Blattfederanbindung der Anpressplatte 52 an einem Rotorsteg radial außerhalb des Ausrücklagers 60 und des Zentralausrückers (Kolben 62) vorgesehen, um dadurch den benötigten Bauraum zu verringern.

Der Kolben 62 des Zentralausrückers wirkt auf das Ausrücklager 60, das wiederum direkt auf die Einheit 66 wirkt, die die Funktionalität des Drucktopfs 64 und der Anpressplatte 52 kombiniert, ohne einen Hebelmechanismus zwischen Ausrücklager 60 und Trennkupplung 20.

Durch den axial kurzen Durchgriff durch den Rotorsteg innen bei gleichzeitig radial außerhalb des Einrücklagers 60 und des CSC-Kolbens 62 angeordneter Blattfederanbindung lässt sich der vorhandene Bauraum optimal ausnutzen.

Die direktbetätigte Trennkupplung 20 zeichnet sich aufgrund nicht vorhandener Reibstellen einer nicht vorhandenen Hebelbetätigung durch eine sehr geringe Betätigungshysterese aus. Diese geringe Krafthysterese erlaubt eine Momentenregelung an der Trennkupplung 20 über die direkte Regelung des Druckes im CSC.

Aufgrund des Einsatzes eines Kurzkolben-CSC mit einer möglichen Verkippung des Kolbens 62 ist es außerdem möglich Betätigungsschieflagen, die sich aufgrund von geometrischen Schieflagenfehlern des Drucktopfes 64 der Anpress- und Gegenplatte 52, 54 und der Scheibe ergeben können auszugleichen. Ohne diesen Kippausgleich kann es zu differenzdrehzahlabhängigen Momentenanregungen kommen.

### Bezugszeichenliste

- 10: Antriebsstrang
- 12: Maschine, elektrisch
- 14: Hybridmodul
- 16: Funktionseinheit
- 18: Rotorelement
- 20: Trennkupplung
- 22: Kupplungsteil
- 24: Kupplungseinrichtung
- 26: Stator, elektr. Maschine
- 28: Gehäuseeinheit
- 30: Zweimassenschwungrad
- 32: Gehäuseteil (Getriebe)
- 34: Doppelkupplung
- 36: Getriebeeingangswelle, erste
- 38: Getriebeeingangswelle, zweite
- 40: Abtriebswelle
- 42: Achse
- 44: Kupplung, erste
- 46: Kupplung, zweite
- 48: Rotorlagerung
- 50: Lagereinrichtung, zentral (Funktionseinheit)
- 52: Anpressplatte (Trennkupplung)
- 54: Gegenplatte (Trennkupplung)
- 56: Ausrückvorrichtung
- 58: Druckanschluss
- 60: Ausrücklager
- 62: Kolben
- 64: Drucktopf
- 66: Einheit, einstückig

## Patentansprüche

1. Hybridmodul (14) für einen eine elektrische Maschine (12), einen Verbrennungsmotor und ein Getriebe aufweisenden Antriebsstrang (10) eines Kraftfahrzeugs, wobei das Hybridmodul (14) aufweist:
ein über die elektrische Maschine (12) antreibbares Rotorelement (18);
eine innerhalb des Rotorelements (18) angeordnete Trennkupplung (20) mit einer Anpressplatte (52); und
eine Ausrückvorrichtung (56) zum Betätigen der Trennkupplung (20) mit einem Ausrücklager (60) und mit einem Drucktopf (64) zum Übertragen von Kraft von dem Ausrücklager (60) auf die Anpressplatte (52) der Trennkupplung (20),
wobei
die Ausrückvorrichtung (56) und die Trennkupplung (20) axial hintereinander angeordnet sind,
**dadurch gekennzeichnet, dass**
die Anpressplatte (52) über ein radial außerhalb des Ausrücklagers (60) angeordnetes Blattfederelement an einen Rotorsteg des Rotorelements (18) angebunden ist.

2. Hybridmodul nach Anspruch 1, **dadurch gekennzeichnet, dass** die Ausrückvorrichtung (56) eine Zentralausrückereinheit mit einem Kolben (62) zum Übertragen der Kraft auf das Ausrücklager (60) aufweist,
und wobei der Kolben (62) und das Ausrücklager (60) radial geschachtelt sind, vorzugsweise das Ausrücklager (60) radial innerhalb des Kolbens (62) angeordnet ist.

3. Hybridmodul nach Anspruch 1, **dadurch gekennzeichnet, dass** das Übertragen der Kraft von dem Ausrücklager (60) über den Drucktopf (64) auf die Anpressplatte (52) ein hebelwirkungsfreies Übertragen der Kraft ist.

4. Hybridmodul nach Anspruch 2, **dadurch gekennzeichnet, dass** eine Führungslänge an dem Kolben (62) kleiner als das 0,4-fache des mittleren Kolbendurchmessers ist.

5. Hybridmodul nach Anspruch 2 oder 4, **dadurch gekennzeichnet, dass** die Zentralausrückereinheit eine Concentric Slave Cylinder Einheit ist.

6. Hybridmodul nach einem der Ansprüche 1 bis 5, **dadurch gekennzeichnet, dass** der Drucktopf (64) und die Anpressplatte (52) einstückig verbunden sind.

7. Hybridmodul nach den Ansprüchen 2 und 6, **dadurch gekennzeichnet, dass** das Blattfederelement radial außerhalb des Ausrücklagers (60) und des Kolbens (62) angeordnet ist.

8. Hybridmodul nach einem der Ansprüche 1 bis 7, **gekennzeichnet durch** eine der elektrischen Maschine (12) in dem Antriebsstrang nachgeschaltete Kupplungseinrichtung (24) mit zumindest einer Kupplung.

9. Hybridmodul nach einem der Ansprüche 1 bis 8, **dadurch gekennzeichnet, dass** das Rotorelement (18) über eine Verbindung mit einer Gegenplatte der Anfahrkupplung (24) direkt oder indirekt über ein Zwischenelement drehfest verbunden ist.

## Claims

1. A hybrid module (14) for a drive train (10) of a motor vehicle having an electric machine (12), an internal combustion engine and a transmission, wherein the hybrid module (14) has:
a rotor element (18) drivable by the electric machine (12);
a disconnect clutch (20) arranged within the rotor element (18) and having a pressure plate (52); and
a release device (56) for actuating the disconnect clutch (20), having a release bearing (60) and a pressure pot (64) for transmitting force from the release bearing (60) to the pressure plate (52) of the disconnect clutch (20),
wherein
the release device (56) and the disconnect clutch (20) are arranged axially one behind the other,
**characterised in that**
the pressure plate (52) is connected to a rotor web of the rotor element (18) via a leaf spring element arranged radially outside the release bearing (60).

2. The hybrid module according to claim 1, **characterised in that** the release device (56) has a central release unit having a piston (62) for transmitting force to the release bearing (60),
and wherein the piston (62) and the release bearing (60) are radially nested, the release bearing (60) being preferably arranged radially inside the piston (62).

3. The hybrid module according to claim 1, **characterised in that** the transmission of force from the release bearing (60) via the pressure pot (64) to the pressure plate (52) is a transmission of force without a leverage effect.

4. The hybrid module according to claim 2, **characterised in that** a guide length on the piston (62) is less than 0.4 times the mean piston diameter.

5. The hybrid module according to claim 2 or 4, **characterised in that** the central release unit is a concentric slave cylinder unit.

6. The hybrid module according to one of claims 1 to 5, **characterised in that** the pressure pot (64) and the pressure plate (52) are integrally connected.

7. The hybrid module according to claims 2 and 6, **characterised in that** the leaf spring element is arranged radially outside the release bearing (60) and the piston (62).

8. The hybrid module according to one of claims 1 to 7, **characterised by** a clutch device (24) connected downstream of the electric machine (12) in the drive train with at least one clutch.

9. The hybrid module according to one of claims 1 to 8, **characterised in that** the rotor element (18) is connected via a connection in a non-rotatable manner to a counterplate of the starting clutch (24) directly or indirectly via an intermediate element.

## Revendications

1. Module hybride (14) destiné à un groupe motopropulseur (10) d'un véhicule à moteur et présentant une machine électrique (12), un moteur à combustion interne et une boîte de vitesses, le module hybride (14) présentant :
un élément de rotor (18) pouvant être entraîné par la machine électrique (12) ;
un embrayage de séparation (20) disposé à l'intérieur de l'élément de rotor (18) avec un plateau de pression (52) ; et
un dispositif de débrayage (56) pour actionner l'embrayage de séparation (20) avec une butée de débrayage (60) et avec un pot de pression (64) pour transmettre la force de la butée de débrayage (60) au plateau de pression (52) de l'embrayage de séparation (20),
le dispositif de débrayage (56) et l'embrayage de séparation (20) étant disposés axialement l'un derrière l'autre,
**caractérisé en ce que**
le plateau de pression (52) est relié à un élément de liaison de rotor de l'élément de rotor (18) par un élément de ressort à lame disposé radialement à l'extérieur de la butée de débrayage (60).

2. Module hybride selon la revendication 1, **caractérisé en ce que** le dispositif de débrayage (56) présente une unité de débrayage centrale avec un piston (62) pour transmettre la force à la butée de débrayage (60),
et le piston (62) et la butée de débrayage (60) étant emboîtés radialement, de préférence la butée de débrayage (60) étant disposée radialement à l'intérieur du piston (62).

3. Module hybride selon la revendication 1, **caractérisé en ce que** la transmission de la force de la butée de débrayage (60) au plateau de pression (52), par l'intermédiaire du pot de pression (64), est une transmission de la force sans effet de levier.

4. Module hybride selon la revendication 2, **caractérisé en ce qu'**une longueur de guidage sur le piston (62) est inférieure à 0,4 fois le diamètre moyen du piston.

5. Module hybride selon la revendication 2 ou 4, **caractérisé en ce que** l'unité de débrayage centrale est une unité de cylindre récepteur concentrique (Concentric Slave Cylinder).

6. Module hybride selon l'une quelconque des revendications 1 à 5, **caractérisé en ce que** le pot de pression (64) et le plateau de pression (52) sont reliés d'un seul tenant.

7. Module hybride selon les revendications 2 et 6, **caractérisé en ce que** l'élément de ressort à lame est disposé radialement à l'extérieur de la butée de débrayage (60) et du piston (62).

8. Module hybride selon l'une quelconque des revendications 1 à 7, **caractérisé par** un dispositif d'embrayage (24) comprenant au moins un embrayage, monté en aval de la machine électrique (12) dans le groupe motopropulseur.

9. Module hybride selon l'une quelconque des revendications 1 à 8, **caractérisé en ce que** l'élément de rotor (18) est relié solidaire en rotation avec un contre-plateau de l'embrayage de démarrage (24) par l'intermédiaire d'une liaison, directement ou indirectement par le biais d'un élément intermédiaire.
